# EUROPEAN PATENT APPLICATION

(11) **EP 3 934 062 A1**
(43) Date of publication of application: **05.01.2022**
(21) Application number: 20762073.3
(22) Date of filing: 21.02.2020
(51) Int. Cl.: H02K 1/16, H02K 3/487

(54) **STATOR CORE ASSEMBLY, AND MOTOR AND VEHICLE HAVING SAME**

(30) Priority: 26.02.2019 CN 201920242259 U
(71) Applicant: Magelec Propulsion Ltd., Jiading District Shanghai 201801 (CN)
(72) Inventor: LIN, Ruixia, Shanghai 201801 (CN); SHAO, Shiliang, Shanghai 201801 (CN); KANG, Yajie, Shanghai 201801 (CN)
(74) Representative: McWilliams, David John
(86) International application number: PCT/CN2020/076097
(87) International publication number: WO 2020/173389

(57) **Abstract**

The utility model provides a stator core assembly, and a motor and a vehicle having same. The stator core assembly includes: a stator core, which is provided with a plurality of stator teeth at intervals in a circumferential direction; and slot wedges, which are formed as magnetic material pieces, are arranged between two adjacent stator teeth and define slot spaces with the two adjacent stator teeth. According to the stator core assembly provided by the utility model, on one hand, the problems of large electromagnetic noise and big vibration of the motor are solved; furthermore, the stator core assembly effectively reduces the electromagnetic noise and vibration while keeping the structure and mechanical strength of the stator core unchanged to avoid influences caused by slotting the stator teeth; and on the other hand, the stator core assembly also has the advantages of being simple in structure, easy to machine and manufacture, high in practicability and the like.

## Description

### TECHNICAL FIELD

The utility model relates to the technical field of motors, and particularly relates to a stator core assembly, and a motor and a vehicle having same.

### BACKGROUND

With the development of science and technology and rapid advancement of a flat type copper wire manufacturing process, more and more motor manufacturers select to use flat type copper wires and open slots to improve the winding efficiency of motor windings, but the use of the open slots causes a cogging torque to increase, which will eventually lead to problems such as large electromagnetic noise and big vibration of a motor.

Motor design engineers usually solve this problem by slotting stator teeth. Although this method can reduce the electromagnetic noise and vibration, this method not only changes the structure of a stator core, but also reduces the mechanical strength of the stator teeth, thereby affecting the use of the stator core.

### SUMMARY

In view of this, one aspect of the utility model provides a stator core assembly.

Another aspect of the utility model further provides a motor having the above-mentioned stator core assembly.

A further aspect of the utility model further provides a vehicle having the above-mentioned motor.

In order to solve the above-mentioned technical problems, the utility model adopts the following technical solutions.

The stator core assembly according to an embodiment in the first aspect of the utility model includes:
a stator core, which is provided with a plurality of stator teeth at intervals in a circumferential direction; and
slot wedges, which are formed as magnetic material pieces, are arranged between two adjacent stator teeth and define slot spaces with the two adjacent stator teeth.

Further, the stator core is of a circular-ring shape; a plurality of through holes are formed in the stator core that is thus connected to a cover plate through the through holes; and the plurality of through holes are uniformly distributed at intervals along the circumferential direction of the stator core.

Further, the through holes are formed in the stator teeth.

Further, 15 stator teeth are provided, and five through holes are provided; and the five through holes are uniformly distributed in the corresponding stator teeth at intervals.

Further, 15 slot wedges are provided, and one slot wedge is arranged between two adjacent stator teeth.

Further, at least one via hole running through along a thickness direction thereof is formed in each slot wedge.

Further, each slot wedge is formed as a long strip, and the size of the slot wedge in a length direction is equal to the size of each stator tooth in a radial direction.

Further, wedge-shaped surfaces are respectively formed on two sides of each slot wedge; wedge-shaped slots are respectively formed in positions, corresponding to the two sides of the slot wedge, on the two adjacent stator teeth; and the two sides of the slot wedge are respectively mounted in the corresponding wedge-shaped slots. Further, the slot wedges are formed as soft magnetic composite material pieces.

The motor according to an embodiment in the second aspect of the utility model includes the stator core assembly according to the above-mentioned embodiment.

The vehicle according to an embodiment in the third aspect of the utility model includes the motor according to the above-mentioned embodiment.

The beneficial effects of the above technical solutions of the utility model are as follows.

According to the stator core assembly provided by the utility model, on one hand, the magnetic slot wedge elements are arranged between the two adjacent stator teeth of the stator core to define the slot spaces, and the slot spaces are used for accommodating coils, so that the problems of large electromagnetic noise and big vibration of the motor are solved.

In the second aspect, the stator core assembly provided by the utility model avoids the influence caused by slotting the stator teeth, thereby keeping the structure and mechanical strength of the stator core unchanged.

In the third aspect, by the use of the magnetic slot wedges, the problems of electromagnetic noise, vibration and the like can be reduced without making any changes in an original motor structure. The stator core assembly having the structure has the advantages of being simple in structure, easy to machine and manufacture, high in practicability and the like.

The motor provided according to the utility model has the above-mentioned stator core assembly. The stator core assembly includes the magnetic slot wedge elements, so that the problems of large electromagnetic noise and big vibration of the motor are solved, and the motor runs safely and reliably.

The vehicle provided according to the utility model has the above-mentioned motor. The motor includes the above-mentioned stator core assembly. The technical features of the stator core assembly and the motor and the technical effects brought by the technical features are all suitable for the vehicle provided by the utility model.

### BRIEF DESCRIPTION OF THE DRAWINGS

Fig. 1 is a schematic structural diagram of a stator core without slot wedges;
Fig. 2 is a schematic structural diagram of a stator core assembly provided by one of embodiments of the utility model; and
Fig. 3 is a comparison diagram of cogging torques of motors with and without slot wedges.

Numerals in the drawings:
stator core 10; stator tooth 11; through hole 12; wedge-shaped slot 13;
slot wedge 20; and via hole 21.

### DETAILED DESCRIPTION

In order to make the objectives, technical solutions and advantages of the embodiments of the utility model clearer, the technical solutions in the embodiments of the utility model will be described clearly and completely below in conjunction with the drawings in the embodiments of the utility model. Obviously, the described embodiments are a part of the embodiments of the utility model, not all the embodiments. Based on the described embodiments of the present disclosure, all other embodiments obtained by those of ordinary skill in the art shall fall within the protection scope of the utility model.

A stator core assembly according to the embodiments of the utility model is firstly specifically described below in combination with the drawings.

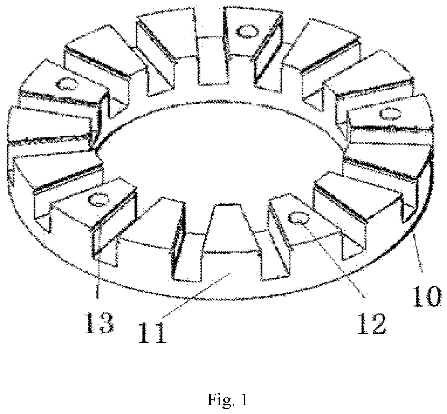

As shown in Fig. 1 to Fig. 3, the stator core assembly according to the embodiments of the utility model includes a stator core 10 and slot wedges 20. Furthermore, it should be noted that the utility model does not make any limitation to the specific type of a motor. For example, the motor can be an axial excitation motor. For convenience of description, the following describes the axial excitation motor as an example.

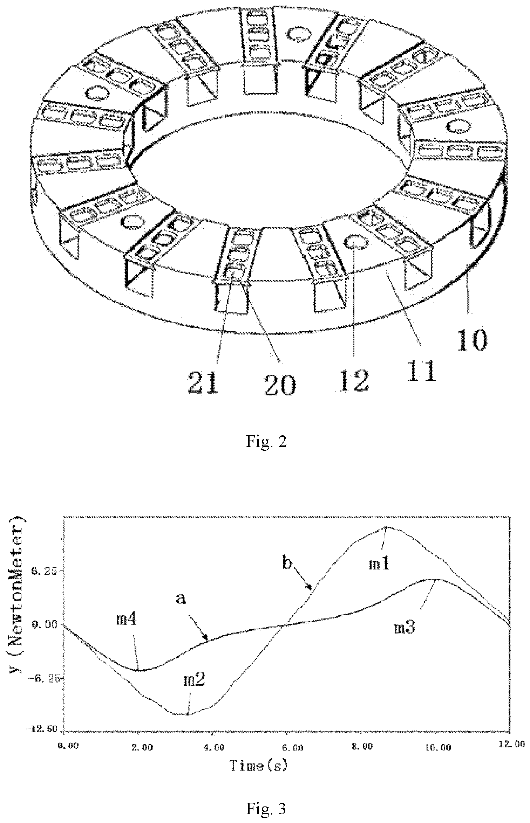

Moreover, the structure of the stator core of the utility model may be reasonably selected according to the type and structure of the motor. Referring to Fig. 2, the stator core 10 in the present embodiment is of a ring-like structure. Specifically, the stator core 10 is provided with a plurality of stator teeth 11 at intervals in a circumferential direction; the slot wedges 20 are formed as magnetic material pieces, are arranged between two adjacent stator teeth 11 and define slot spaces with the two adjacent stator teeth 11.

That is to say, the stator core assembly is mainly composed of the stator core 10 and the slot wedges 20. The stator core 10 may be provided with the plurality of stator teeth 11 which are disposed at intervals along the circumferential direction of the stator core 10. In one embodiment, through holes 12 are formed in the stator core 10. The number of the through holes 12 is not limited. Referring to Fig. 2, a plurality of through holes are provided. In specific implementation, a cover plate may be connected through the through holes 12 by using bolts. The through holes 12 may be counterbores, so that bolt heads of the bolts are arranged in the counterbores to avoid affecting other parts.

The slot wedges 20 may be formed as the magnetic material pieces. The slot wedges made of a magnetic material are applied to the motor, so that the efficiency and the power factor of the motor can be improved; and moreover, the electromagnetic noise, undesired vibrations, extremely high temperature and the like can be reduced. Specifically, in one embodiment of the utility model, the slot wedges 20 may be arranged between two adjacent stator teeth 11, and may define the slot spaces with the two adjacent stator teeth 11. In specific implementation, coils are wound on the stator teeth 11. The coils (not shown in the drawings) are placed in the slot spaces. In addition, the number of the stator teeth 11 on the stator core 10 is the same as the number of the coils. All the coils are connected to each other through coil connecting pieces (not shown in the drawings) to form different windings.

Therefore, according to the stator core assembly provided by the utility model, the problems of large electromagnetic noise and big vibration of the motor are effectively solved by introducing the magnetic slot wedge elements, and the electromagnetic noise and the vibration can be effectively reduced. Furthermore, the use of the magnetic slot wedge structures will not make any changes to the original structure of the motor, so that the structure and the mechanical strength of the stator core are maintained. The stator core assembly is simple in structure, easy to machine and manufacture, and high in practicability.

In some embodiments, the stator core 10 may be of a circular-ring shape. There may be a plurality of through holes 12 which can be uniformly distributed at intervals along the circumferential direction of the stator core 10 to facilitate stably cooperative connection between the stator core 10 and the cover plate.

Preferably, the through holes 12 may be formed in the stator teeth 11 to avoid the influence on the coils wound on the stator teeth 11 and facilitate the cooperative connection between the stator core 10 and the cover plate.

It should be noted that the number of the stator teeth 11 on the stator core 10 and the number of the through holes 12 in the stator teeth 11 are not limited in the utility model. An appropriate stator core and an appropriate stator tooth number and through hole number may be selected according to a specific demand. Moreover, in one embodiment, the number of the stator teeth 11 needs to be ensured to be the same as the number of the coils to ensure that the coils are reliably mounted on the stator core 10. Specifically, in one embodiment provided by the utility model, there may be 15 stator teeth 11 and five through holes 12. At most one through hole 12 is formed in each stator tooth 11. The five through holes 12 may be uniformly distributed in the corresponding stator teeth 11 at intervals. In other embodiments, the number of the stator teeth, the number of the through holes and a position relationship between the through holes and the stator teeth are not limited, and can be selected as required.

In some embodiments, there may be 15 slot wedges 20, and one slot wedge 20 may be arranged between two adjacent stator teeth 11. That is, one slot wedge 20 is arranged in a gap between every two adjacent stator teeth 11 to effectively reduce the electromagnetic noise. In other embodiments, the number of the slot wedges and the positions of the slot wedges are not limited, either, and can be flexibly selected according to an actual condition.

In some other embodiments, at least one via hole 21 may be formed in each slot wedge 20. For example, referring to Fig. 2, there may be three via holes 21 on each slot wedge 20. The via holes 21 may run through along a thickness direction of the slot wedge 20. The via holes 21 in the slot wedges 20 can reduce the consumption of machining materials and reduce the cost and is favorable for heat dissipation of the coils. In other embodiments, the number of the via holes in the slot wedges, the shapes of the via holes and the relative position relationships among the different via holes are not limited. For example, the via holes may be circular, square, rhombic, and the like; or, the via holes are combinations of various structural shapes; or, the plurality of via holes may be located on the same straight line, or different straight lines, which are not limited in the utility model.

Referring to Fig. 2, optionally, each slot wedge 20 is formed as a long strip, and the size of the slot wedge 20 in a length direction may be equal to the size of each stator tooth 11 in a radial direction, which is convenient for cooperation between the stator core 10 and another part.

In some preferred embodiments, wedge-shaped surfaces are respectively formed on two sides of each slot wedge 20; wedge-shaped slots 13 are respectively formed in positions, corresponding to the two sides of the slot wedge 20, on two adjacent stator teeth 11; and the two sides of the slot wedge 20 are respectively mounted in the corresponding wedge-shaped slots 13 to facilitate installation, so that the slot wedge 20 is stable and firm and is not easy to fall off. Furthermore, the insides of the wedge-shaped slots 13 and/or the wedge-shaped surfaces on the two sides of the slot wedges 20 may be uniformly coated with glue having a higher insulation level. Slot wedge looseness, caused by a magnetic pull force and local high temperature in a running process of the motor, of the magnetic slot wedges is avoided, so that reliable use of the magnetic slot wedges is guaranteed.

In some embodiments, the slot wedges 20 may be formed as soft magnetic composite material pieces, so that the slot wedges 20 can effectively reduce the electromagnetic noise.

The stator core assembly can be applied to the motor. By application to the motor, the electromagnetic noise is low, and the vibration is small. As shown in Fig. 3, Fig. 3 is a comparison diagram of cogging torques of motors with and without slot wedges. The curve a represents a cogging torque of a motor with the slot wedges, and the curve b represents a cogging torque of a motor without the slot wedges. In Fig. 3, the coordinates of the point m1 are (8.6667, 11.2815), the coordinates of the point m2 are (3.3333, -10.5571), the coordinates of the point m3 are (9.9167, 5.2732), and the coordinates of the point m4 are (2.0000, -5.4409). It can be known through the curves and the coordinates of the above-mentioned points that an absolute value of a peak value of the longitudinal coordinate of the cogging torque of the motor without the slot wedges is larger, but the absolute value is obviously reduced after the slot wedges are used, so that the effect of reducing the electromagnetic noise and the vibration is outstanding.

According to the stator core assembly provided by the utility model, the problems of large electromagnetic noise and big vibration of the motor are solved without changing the original mechanical structure and strength of the motor. Furthermore, the stator core assembly also has the advantages of being simple in structure, easy to machine and manufacture, high in practicability and the like.

A motor according to the embodiments of the utility model includes the stator core assembly according to the above-mentioned embodiment of the utility model. Since the stator core assembly according to the above-mentioned embodiment of the utility model has the above-mentioned technical effects, the motor according to the embodiments of the utility model also has the corresponding technical effects. That is, the electromagnetic noise and the vibration can be effectively reduced, and the structure and the mechanical strength of the stator core can be kept unchanged.

A vehicle according to the embodiments of the utility model includes any motor according to the above-mentioned embodiments, since the motor according to the above-mentioned embodiment of the utility model has the above-mentioned technical effects, the vehicle according to the embodiments of the utility model also has the corresponding technical effects. That is, the electromagnetic noise and the vibration can be effectively reduced, and the structure and the mechanical strength of the stator core can be kept unchanged.

For those skilled in the art, other structures and operations of the motor and the vehicle according to the embodiments of the utility model can all be understood and easily realized, so that there is no detailed description.

The above descriptions are the preferred implementation modes of the utility model. It should be noted that those of ordinary skill in the art can further make several improvements and retouches without departing from the principles of the utility model. These improvements and retouches shall all fall within the protection scope of the utility model.

## Claims

1. A stator core assembly, **characterized in** comprising:
a stator core, which is provided with a plurality of stator teeth at intervals in a circumferential direction; and
slot wedges, which are formed as magnetic material pieces, are arranged between two adjacent stator teeth and define slot spaces with the two adjacent stator teeth.

2. The stator core assembly according to claim 1, **characterized in that** the stator core is of a circular-ring shape; a plurality of through holes are formed in the stator core that is thus connected to a cover plate through the through holes; and the plurality of through holes are uniformly distributed at intervals along the circumferential direction of the stator core.

3. The stator core assembly according to claim 2, **characterized in that** the through holes are formed in the stator teeth.

4. The stator core assembly according to claim 3, **characterized in that** 15 stator teeth are provided, and five through holes are provided; and the five through holes are uniformly distributed in the corresponding stator teeth at intervals.

5. The stator core assembly according to claim 4, **characterized in that** 15 slot wedges are provided, and one slot wedge is arranged between two adjacent stator teeth.

6. The stator core assembly according to claim 1, **characterized in that** at least one via hole running through along a thickness direction thereof is formed in each slot wedge.

7. The stator core assembly according to claim 1, **characterized in that** each slot wedge is formed as a long strip, and the size of the slot wedge in a length direction is equal to the size of each stator tooth in a radial direction.

8. The stator core assembly according to claim 1, **characterized in that** wedge-shaped surfaces are respectively formed on two sides of each slot wedge; wedge-shaped slots are respectively formed in positions, corresponding to the two sides of the slot wedge, on the two adjacent stator teeth; and the two sides of the slot wedge are respectively mounted in the corresponding wedge-shaped slots.

9. The stator core assembly according to claim 1, **characterized in that** the slot wedges are formed as soft magnetic composite material pieces.

10. A motor, **characterized in** comprising the stator core assembly according to any one of claims 1 to 9.

11. A vehicle, **characterized in** comprising the motor according to claim 10.
